# EUROPEAN PATENT APPLICATION

(11) **EP 1 235 328 A1**
(43) Date of publication of application: **28.08.2002**
(21) Application number: 01830119.2
(22) Date of filing: 21.02.2001
(51) Int. Cl.: H02K 5/22

(54) **Method to equip an induction motor with electrical connections and connection device that carries out this method**

(71) Applicant: Ergon S.r.l., 56021 Cascina PI (IT)
(72) Inventor: Antonacci, Domenico, 56021 Cascina PI (IT)
(74) Representative: Celestino, Marco

(57) **Abstract**

A device for electrical connection of induction motors (M1) operating a pump (P), comprising a terminal block (3) of selective connection of wires and at least one switch (5) suitable for receiving at least two wires to turn on or off the induction circuit. The terminal block (3) and the switch (5) are integrated in a single support body (4). A container is provided (1) integrated to the support body (4) and fastened to the motor (M1) that may comprise also means for electrically connecting a condenser (14). A propeller case (21) may be also provided directly mounted on the support body (4), which is integral to the container (1). The automatic release of the switch (5) is possible when opening the container (1).

## Description

### Field of the invention

The present invention relates to induction motors and more precisely it relates to the electrical connections for supplying such motors.

In particular, the invention relates to a method to equip an induction motor with electrical connections .

Furthermore the invention relates to a connection device that carries out this method.

### Background of the invention

In induction motors electrical connections are provided to and from the motor, such as:
- a terminal block for connection to the supply network or for connection to external circuits for turning off or turning on the electrical supply,
- a switch for turning off or turning on manually the electrical supply;
- a condenser electrically connected to the external supply through the switch.

Such connections are normally arranged in an insulated box mounted on a support base formed on the body of the motor.

When assembling the motor, said devices (terminal block, switch, condenser) are presently connected to each other by means of a wiring system. This requires considerable work and several different parts. Furthermore as well known, a multiple wiring introduces unavoidably connections subject to production defects.

Concerning terminal blocks, in motors contact screws are provided that tighten metal terminals. In some cases, the metal terminals are integrated into a single plastic block. Terminal block exist as well wherein the connection is made by quick fastening elements arranged on the wire ends, such as for example "fast-on" connections, eyelet or fork connections. However, some types of motor do not provide terminal blocks for all these types of connections at the same time.

Motors of this type, for example applied to machines, pumps, etc., are subject to maintenance that usually is made when the switch is closed and the motor is on "standby". This can cause accidents since such maintenance should be made without any voltage or at least with the switch that opens the electrical supply.

### Summary of the invention

It is therefore object of the present invention to provide a method for the electrical connection of induction motors that does not need complex wires and makes easier the assembling steps.

It is another object of the present invention to provide a connection device for the electrical connection of induction motors in a quick and easy way and without wires between the various parts.

It is a particular object of the present invention to provide an electrical connection device that prevents the operators from working on a motor that is on standby.

It is another particular object of the present invention to provide an electrical connection device that allows to be released from the motor and mounted to an adjacent wall or support.

These and other objects are achieved by the device according to the invention for electrical connection of induction motors comprising:
- terminal blocks for selective connection of wires;
- at least one switch suitable for receiving at least two wires to turn on or off the induction circuit.

Its characteristic is that the terminal blocks and the at least one switch are integrated in a single support body.

Advantageously, a container is provided integrated to the support body and has means for its fastening to the motor.

The terminal blocks can be integrated in the support body. Furthermore the switch can comprise means for electrically connecting a condenser.

A propeller case directly mounted on the support body may be also provided.

Preferably, the support body is arranged within a container having means for fastening to the motor and means are provided for automatic release of the switch when opening the container.

The terminal blocks may comprise also a ground terminal, or the ground terminal is separated from the other terminal block.

If the motor operates a pump, the support body comprises a pressure switch in it integrated.

In the preferred embodiment, then, the support body operates as condenser holder box (terminal board cover), it contains the switch for sectioning the electrical supply line towards the motor, it contains the terminal blocks for connection of the outer and inner cables and provides the direct connection of the condenser without intermediate wires.

The possibility of integration of the plastic propeller case to the device allows a quick and safe assembling of the same.

The support body can be mounted releasably from the motor and can work as remote distribution board. This option is advantageous in particular for submersed pumps.

A system for turning off the voltage is advantageously provided that sets the switch off when opening the container. This assures automatically the absence of voltage to the electric motor when the box is open. This way, for maintenance reasons an operator shall deliberately operate the device for giving voltage to the motor. Otherwise, the motor is not supplied, and will not start in case external devices, such as for example a float in the case of a pump, provide a signal of demand of start of the motor.

### Brief description of the drawings

Further characteristics and the advantages of the method and of the device to provide the electrical connection to a motor will be made clearer with the following description of an embodiment thereof, exemplifying but not limitative, with reference to the attached drawings, wherein:
- figure 1 shows a perspective view of a motor pump on which an electrical connection device according to the invention is mounted;

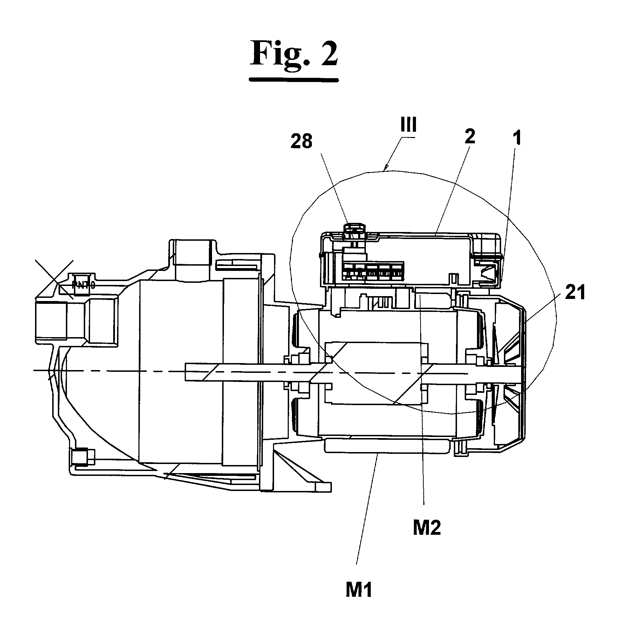

- figure 2 shows a sectional longitudinal view of the motor pump of figure 1;
- figure 3 is a detailed view of the device taken from the cross sectional view of figure 2;
- figure 4 is a cross sectional view according to arrows IV-IV of the detail of figure 3;
- figure 5 is a horizontal sectional view according to arrows V-V of the detail of figure 3.

### Description of a preferred embodiment

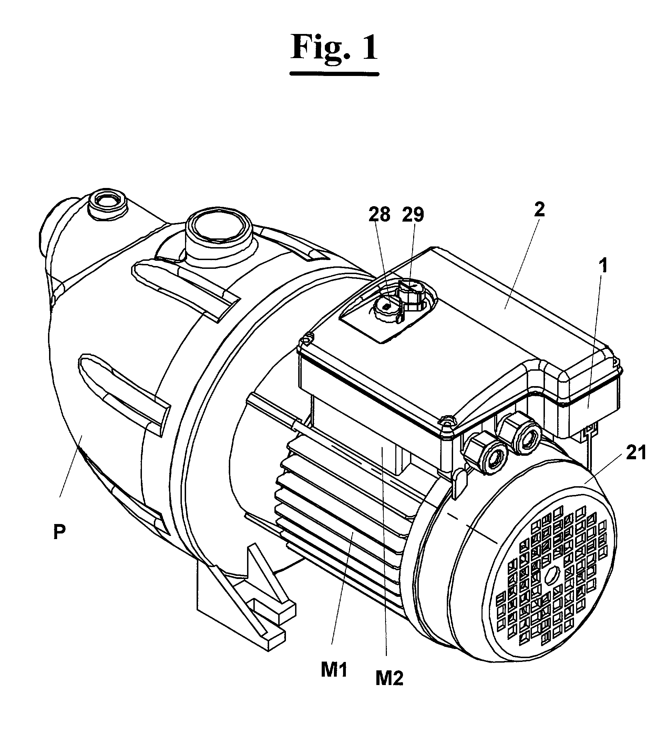

With reference to figure 1, a motor pump P has a condenser holder box 1, directly mounted on the terminal board M2 of an electric motor M1 and having a cover 2 to it connected so that it can be open.

Box 1 has an opening through which the electrical wires pass coming from the winding of the motor for being then connected to a terminal block 3.

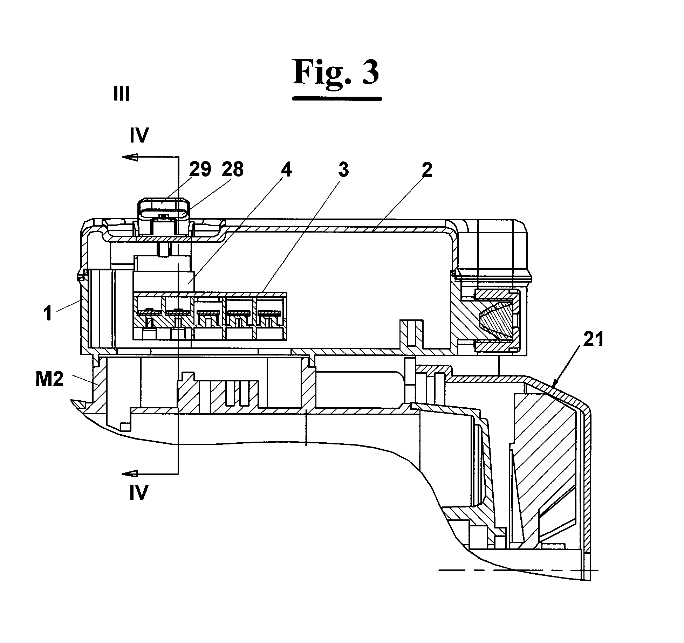

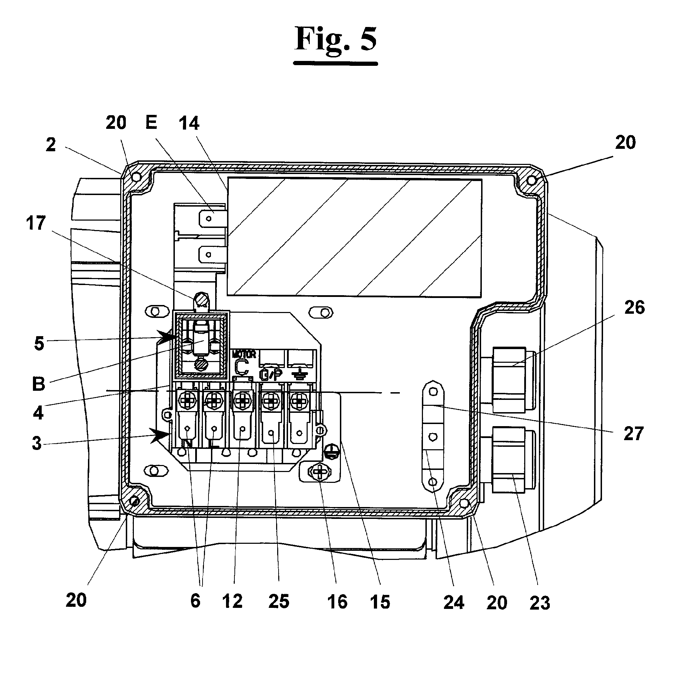

Terminal block 3, as shown in figures 3 and 5, can connect both Fast-on terminals and peeled wire ends as well as eyelets and fork terminals.

According to the invention terminal block 3 is integrated in a support body 4, preferably in moulded plastic, which contains the various terminals and that can be removed and assembled in a rapid way. On the same support body 4 a recess B is made wherein a switch 5 is housed. This way, switch 5 and terminal block 3 are provided integrated on a single support 4, with the considerable advantages above shown.

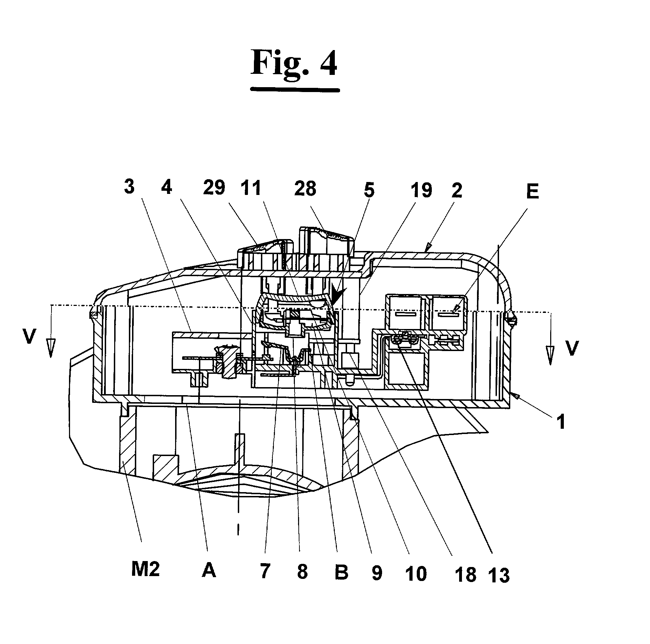

As shown in the detailed view of figure 4, switch 5 comprises:
- a terminal 6 for the voltage supply by a phase wire;
- a shiftable contact 7;
- a spring 8 loading the shiftable contact 7;
- a support 9 for returning springs;
- a light 10 for signalling the presence of voltage;
- a transparent protection 11 of the light 10.
- a terminal 12 of outlet of the voltage, towards the contact said "Common" of the motor;
- a terminal 13 of outlet of the voltage, towards the contact said "Run" of the motor;

According to a particular aspect of the invention, the terminal 13 of outlet towards the contact "Run" is designed in order to allow the direct connection of a condenser 14 to the terminal block through switch 5, without the use of wires or screw terminals.

This way, a multifunctional terminal block 3 is obtained with switch 5 and condenser 14 integrated, not available in the prior art.

A ground terminal 15 is provided designed to work both as connection element of the ground protection and as fastening of the condenser-holder box. In fact, through a screw 16 both the electrical connection of the ground contact on the metal body of motor M1 and at the same time the fastening of terminal block 3 with box 1 can be provided. This solution allows to reduce further the number of components and of consequence the time of assembling and then the final cost of the motor.

With reference to figures 4 and 5, adjacent to switch 5 a lever 17 is present that pushed by a spring 18 brings the switch to the position of Contact Open (position "zero"). When cover 2 is close to the base 1 of the box a pin 19, provided under cover 2, pushes against lever 17 allowing to move the switch to the closed position.

This function is an intrinsic safety of the device, since if box 1 is open by screws 20 without turning off the voltage to the motor, lever 17 turns automatically switch 5 off opening the contacts and then the voltage. In this condition the motor can be supplied only if the operator wills, by pushing switch 5.

In addition to terminal block 3, the structure of box 1 provides the possibility to assemble directly on it the propeller case of motor 21, through a positive engagement 22 that once closed can be removed only through the use of a tool, as provided by the safety rules.

Also this aspect is a further element of intrinsic safety of the device.

The motor must provide a winding whose ends are made with flexible wires that have terminals compatible with those present in the terminal block. In the example described, female Fast-on terminals are provided on the motor and male terminals on the terminal block. The condenser must provide terminals of the type fast-on so that they engage directly on the terminal block; the latter can also work as support of the condenser same.

Always for making the assembling of terminal block 3 easy and quick to use, it can provide a positive engagement with the basis of box 1, without the need of using screws or other fastening devices, even if other fastening systems can be used.

### Connection of the motor:

- the wire said "Common" of the motor is quickly connected to the terminal "Common" 12 of terminal block (C);
- the wire said "Run" of the motor has to be connected directly on the pole of the condenser at the side where the Run terminal (M) of terminal block 13 is connected; this way the connection between a pole of the supply line, the condenser and the Run wire coming from the winding of the motor is reached.

The wire said "Auxiliary 0" or start of the motor has to be connected to the other pole of the condenser, on one of the two Fast-on terminals and, in this way, the connection between the circuit auxiliary of the motor and the condenser is reached.

The supply wire of the motor enters the box through cable socket 23 and is tightened by a plastic fastener 24, if the wire is mounted on the motor by the same manufacturer, who can use also terminals of the type fast-on that allow a quick assembling.

The manufacturer arranges the neutral pole on terminal 5 defined as "N" and the phase wire on terminal 6 defined as "L".

The connections above described use all quick fastening systems (connections of type Fast-on).

Since in some cases terminal blocks of the type fast-on cannot be used, or special connection for the wires of supply are provided, in certain cases the wire must have simply peeled ends.

As it has been designed, the terminal block according to the invention allows the connection both of special wires and not, either directly on the fast-on terminal (for those special) or by the screw that tightens the terminal (for peeled wire ends). This represents a very easy solution for the device.

On the same terminal block a terminal 25 defined as G/P can be present that allows to fasten quickly in series to the wire said "Common" of the motor an external device of drive or protection, for example a pressure switch, a float or a heat protection switch of the motor. If necessary, the external contact can be connected to box 1 with a wire that through socket 26 and fastener 27 reaches quickly terminal block 3.

### Operation:

Once all the connections have been executed and the condenser holder box has been closed, the motor can be started pressing a push button 28 mounted out of cover 2 of box 1, or it can be stopped pressing a push button 29 mounted also on cover 2 of box 1.

According to a different embodiment of the invention the same device can be used as remote drive board, separated form the motor, connected to a frame or on a wall, not directly mounted on the metal body of the motor. In this case the opening for passage of the wires of the motor is closed and the wires of the motor pass through a electrical cable into box 1, running through the fastener 26. Typically this type of product is used for installation of submersed pumps, where the motor and the condenser and the box cannot be assembled together. Also in this version there is the possibility of reducing all the electrical connections of the motor, of the condenser, of the switch and of other external drive and/or control devices.

According to the invention the following advantages are achieved:
- increase of the safety final of the product, by the system of automatic release of the voltage when opening the recess that contains the electrical connections;
- high safety since the propeller case is integrated to the box and can be locked to the same in only one way, not allowing the assembling in positions wrong or dangerous positions;
- strong reduction of the number of wires in the terminal board of the motor, since only the wires coming from the winding are maintained. This allows quick assembling of all the unit;
- easy connection of the wire of supply and of other external devices to the terminal block, through the use of terminal block of type Fast-on and of optional support terminal block defined as G/P;
- strong reduction of the number of components that the manufacturer of the motor must buy and manage.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Device for electrical connection of an induction motor, said motor (M1) having wires coming from the induction windings, wires of electrical supply as well as other wires coming from external devices, comprising:
- at least one terminal block (3) for selective connection of said wires;
- at least one switch (5) suitable for receiving at least two of said wires to turn on or off said induction windings, **characterised in that**
said terminal block (3) and said at least one switch (5) are integrated in a single support body (4).

2. Device according to claim 1, wherein a container is provided (1) integrated to said support body (4) and having means for fastening to said motor (M1).

3. Device according to claim 1, wherein said support body (4) on which said terminal block (3) and said at least one switch (5) are integrated comprises means for electrical connection to a condenser (14).

4. Device according to claim 1, wherein a propeller case (21) is provided directly mounted on said support body (4).

5. Device according to claim 1, wherein said support body (4) is arranged within a container (1) having means for fastening to said motor (M1), means being provided for automatic release of said switch (5) when opening said container (1).

6. Device according to claim 1, wherein said terminal block (3) comprises also a ground terminal (15).

7. Device according to claim 1, wherein said motor (M1) operates a pump (P) and said support body (4) comprises a pressure switch in it integrated.

8. Device according to claim 1, wherein said support body (4) is arranged within a container (1) that can be detached from said motor and is used as electrical board, connected to a frame or on a wall, and not directly mounted on the metal body of the motor (M1).
